# EUROPEAN PATENT SPECIFICATION

(11) **EP 2 139 589 B1**
(45) Date of publication and mention of the grant of the patent: **03.10.2012**
(21) Application number: 08745056.5
(22) Date of filing: 04.04.2008
(51) Int. Cl.: B01D 53/50, C10G 9/16

(54) **MEHTOD FOR INHIBITING FOULING IN BASIC WASHING SYSTEMS**
VERFAHREN ZUR BEWUCHSHEMMUNG BEI BASISCHEN WASCHSYSTEMEN
PROCEDE POUR INHIBER L'ENCRASSEMENT DANS DES SYSTEMES DE LAVAGE BASIQUES

(30) Priority: 05.04.2007 US 910413 P; 03.04.2008 US 62359
(43) Date of publication of application: 06.01.2010
(73) Proprietor: BAKER HUGHES INCORPORATED, Houston, TX 77019-2118 (US)
(72) Inventor: GU, Zhenning, Sugar Land, TX 77478 (US); STARK, Joseph, L., Richmond, TX 77469 (US); METZLER, Roger, D., Sugar Land, TX 77478 (US)
(74) Representative: Hoffmann, Benjamin
(86) International application number: PCT/US2008/059328
(87) International publication number: WO 2008/124551

(56) References cited:
- EP-A- 0 824 142
- WO-A-92/13929
- WO-A-96/37279
- US-A- 5 160 425
- US-A- 5 288 394
- US-A- 5 527 447

## Description

### BACKGROUND OF THE INVENTION

### 1. Field of the Invention

The present invention relates to a method for inhibiting fouling in basic washing systems. The present invention particularly relates to the use of additives for inhibiting fouling in basic washing systems.

### 2. Background of the Art

Gas Scrubbers are devices used for separating components of a gas admixture. In some embodiments, these devices are used to "purify" gasses or, stated in the alternative, remove undesirable components from a gas stream. For example, primitive scrubbers have been used since the inception of submarine warfare to remove carbon dioxide from the air supply in the submarine.

More recently, gas scrubbers have proven to be essential in many industries. For example, Gas Scrubbers are used to prevent pollution from the burning of coal during power generation. Gas Scrubber are also used to remove undesired components from crude oil during refining and to remove undesirable components from process gas streams during the production of chemicals, metals and devices such as semiconductors and the like.
Document US-A-5288394 discloses a process for inhibiting the formation and deposition of polymer-based fouling materials after caustic scrubbing of gaseous or liquid hydrocarbon streams. A hydrazide compound, which may be oxalyl hydrazide, is added to the hydrocarbon stream after caustic scrubbing, in contrast to the present invention which involves the addition of the additive during the wash phase.

### Summary of the Invention

In one aspect, the invention is a method for the prevention or mitigation of fouling in basic washing systems comprising treating a liquid washing phase used in a basic washing system with an additive comprising at least one compound selected from the group consisting of oxalyl dihydrazide, chlorobenzhydrazide, aminobenzhydrazide, and mixtures thereof.

In yet another aspect, the invention is a method for mitigating the fouling of a caustic scrubber used to wash a gas steam including ethylene comprising treating a liquid washing phase used in the caustic scrubber with an additive comprising a member selected from the group consisting of oxalyl dihydrazide, chlorobenzhydrazide, aminobenzhydrazide, and mixtures thereof.

### Description of the Preferred Embodiments

One embodiment of the invention is a method for the prevention or mitigation of fouling in a basic washing system. The most common basic washing systems are caustic scrubbers. For the purposes of the present application, a caustic scrubber is device for removing water soluble and/or acidic or other base reactive components from a fluid stream, often a gas. Also for the purposes of the present application, the term "caustic" is defined broadly to mean a strong base (alkaline) substance including, but not limited to sodium hydroxide, potassium hydroxide, and lithium hydroxide; but also specifically including any compound now known or after discovered useful for extracting a water soluble and/or acidic or other base reactive component from a fluid stream in a fluid scrubber. For example, the basic washing systems useful with the disclosure may include an organic amine or a solution including an organic amine as a liquid scrubbing material..

Conventional gas scrubbers include a "tower" which is, in essence, a pipe or column, typically including trays or occasionally an inert packing, where a gas stream is contacted with a liquid scrubbing material. In the case of at least one embodiment of the invention, the liquid scrubbing material is a caustic liquid as defined herein. In some applications, the liquid scrubbing material is passed down through an upward moving gas stream with a packing serving to increase the mixing of the gas and liquid scrubbing material. In an alternative embodiment, the direction of the gas and fluid passing through the tower may be reversed from the first embodiment. In still another embodiment, the gas stream and the caustic fluid of the method of the application may move in the same direction.

There are many types of gas scrubbers which are included within the meaning of the term caustic scrubber that are known to be useful. For example, U.S. Patent No. 6,284,019 to Sorensen, discloses a scrubber for removing pollutants from a gas comprising a housing for conducting the gas therethrough, a mechanism for introducing pollutant-reactive filtering agent into the housing, a sump for collecting the filtering agent and having a first volume, and an intermediate sump for collecting the filtering agent and channeling the filtering agent into the sump, the intermediate sump having a second volume that is less than the first volume. Rather than having a tower, this patent discloses the use of a "chamber" which serves the same function as a tower and, for the purposes of the invention shall be designated as such.

A variety of scrubbers are commercially available. For example, the TRIMER Corporation markets a variety of scrubbers for use in industry. Exemplary are the so called "cross flow" scrubbers, which come in a variety of configurations. Common to most commercial scrubbers is a "sump" and/or storage tank for scrubbing liquids. These sumps and/or storage tanks may be internal or external to the scrubber cabinets. Any gas scrubber which utilizes a caustic liquid in order to scrub a gas and is known to be useful to those of ordinary skill in the art of using gas scrubbers may be used with embodiments of the method of the disclosure.

With caustic scrubbers, the caustic liquid in the scrubber is sometimes consumed with use, especially when the liquid scrubbing material is an inorganic base such as sodium hydroxide. As a consequence, in such embodiments, the liquid scrubbing material may be renewed either continuously or intermittently. Ideally, it would be desirable in the art that the caustic liquid scrubbing material be renewed only as it is consumed, that is as a consequence of the loss of alkalinity due to reaction of the caustic liquid scrubbing material with acidic, or base reactive, compounds in the fluid being scrubbed. Unfortunately, the scrubber may require a more frequent renewal of the caustic fluid, if not an actual shut down and clean out, due to the phenomena of fouling.

While caustic scrubbers are a very common embodiment of basic washing systems, there are other types of basic washing systems in use. Other examples of basic washing systems include scrubbers that use alkanolamines, (such as methyl ethylamine (MEA), diethyl amine (DEA), methyl diethylamine (MDEA), and amine diisopropanol (ADIP)), hindered amines, and alkazide as the liquid washing materials. Still other types of basic washing systems include water wash columns such as those used to refine crude butadiene in butadiene manufacturing plants. Some washing systems are liquid/liquid washing systems where both the washing materials and the stream being washed are liquids and at least some embodiments of the invention may be used with these applications as well.

For the purposes of the application, fouling, in relation to a basic washing system, occurs when chemical reactions occur in the caustic liquid scrubbing material resulting in solids (or sludges) and/or substantial increases in the viscosity of the caustic liquid scrubbing material.

While not wishing to be bound by any theory, it is never-the-less believed that when fluids including unsaturated compounds are washed; at least some fouling is the result of aldol polymerizations. In an aldol polymerization, often referred to in the art as an aldol condensation, two molecules, each one having an aldehyde or ketone group react to form a single molecule having a hydroxyl and a carbonyl group. Embodiments of the method of the invention are particularly useful for scrubbing gas streams having components that may undergo an aldol condensation. For example, in one embodiment, the method of the disclosure is used to wash gas including ethylene using a caustic scrubber.

Refineries and Chemical Plants are among those industries most likely to have fluid streams and especially gas streams which include either acidic or base reacting gases, or both, that are undesirable and also include aldehyde and/or ketones. Embodiments of the method of the application may be useful in applications where, except for causing fouling, the aldehyde and/or ketone component of a fluid stream is not otherwise undesirable. Embodiments of the method of the invention are also useful in applications where it is desirable to remove an aldehyde or ketone component of a gas stream.

In one embodiment of the invention, it is noted that failure to scrub or adequately scrub a gas stream that has a tendency to foul scrubbers is often undesirable in industry. Fouling in scrubbers can be the cause of increased maintenance costs and lost productivity where products are either made a slower rate because of poor scrubber efficiency or products produced are out of specification. As an example of the latter, consider a gas stream which may have a CO₂ and/or H₂S specification. Failure to meet the specification may require that the product gas be sent through a second scrubber or refused by a consumer. Either of these can cause production costs to rise with a consequential loss of profits.

Scrubber failures due to fouling may also have safety and environmental consequences. While fouling may be most noticeable in the tower of a scrubber, it may also occur in the sump, holding tank, and in any other pipe, vessel, or other portion of a scrubber where caustic liquid scrubbing material has sufficient residence time to allow for the dropping of suspended solids or the forming of a film or coating onto the walls of the exposed portions of the scrubber.

In some embodiments of the method of the disclosure, a scrubber is treated with an additive. The additive includes at least one member of the group consisting of oxalyl dihydrazide, chlorobenzhydrazide, aminobenzhydrazide, and mixtures thereof. For the purposes of this application, salts of these compounds that may form salts are included within the scope of the disclosure even if not specifically specified.

The cations for the salts listed therein may be any cation which would result in a caustic solution soluble salt. In one embodiment of the invention, the additives includes at least one member of the group consisting of: oxalyl dihydrazide, 2-chlorobenzhydrazide, 4-aminobenzhydrazide, and mixtures thereof. While, in one embodiment, the additive is a solid which can be added directly or indirectly to a caustic liquid scrubbing material, in other embodiments, the additive is added as a solution or suspension.

The additives of the present invention may be in the form of a aqueous solution, possibly including a dispersant, of oxalyl dihydrazide, chlorobenzhydrazide, aminobenzhydrazide, and mixtures thereof. When the additives are in the form of a solution, generally the concentration the oxalyl dihydrazide, chlorobenzhydrazide, aminobenzhydrazide, and mixtures thereof will be from about 0.1 to about 50 weight percent. In some embodiments, the concentration will be from about 5 to about 30 weight percent and in others, from about 7 to about 20 weight percent.

Any dispersant useful for dissolving or suspending one or more of these compounds in water may be used with at least some of the embodiments of the method of the application. In addition, one of the compounds may be dissolved or suspended in a water soluble or miscible solvent. Exemplary of such materials are: mono-ethylene glycol n-hexyl ether (Hexyl Cellosolve® available from Union Carbide); ethylene glycol monobutyl ether (Butyl Cellosolve®); di- and tri-propylene glycol derivatives of propyl and butyl alcohol, which are available from Arco Chemical (3801 West Chester Pike, Newtown Square, Pa. 19073) and Dow Chemical (1691 N. Swede Road, Midland, Mich.) under the trade names Arcosolv® and Dowanol®; mono-propylene glycol mono-propyl ether; di-propylene glycol mono-propyl ether; mono-propylene glycol mono-butyl ether, di-propylene glycol mono-propyl ether, di-propylene glycol mono-butyl ether; tri-propylene glycol mono-butyl ether; ethylene glycol mono-butyl ether; di-ethylene glycol mono-butyl ether, ethylene glycol mono-hexyl ether; di-ethylene glycol mono-hexyl ether; 3-methoxy-3-methyl-butanol; and mixtures thereof. In regard to these solvents, "butyl" includes normal butyl, isobutyl and tertiary butyl groups. Mono-propylene glycol and mono-propylene glycol mono-butyl ether can be used and are available under the tradenames Dowanol DPnP® and Dowanol DPnB®. Di-propylene glycol mono-t-butyl ether is commercially available from Arco Chemical under the tradename Arcosolv PTB®. In some instances, it might be preferred to use combinations of these solvents, such as Hexyl cellusolve with Butyl cellusolve, or Dowanol PnB with 3-methoxy-3-methyl-butanol.

The additives of the application are desirably fed to basic washing systems such as scrubbers at an effective concentration. Those of ordinary skill in the art of running such units are well versed in determining the effective concentration of additives to use in their equipment. Such concentrations are dictated, in the case of gas scrubbers for example, by the operational conditions of the scrubbers including the makeup of the gas stream, feed rates, and operating temperatures. Generally, the additives will be present at a level in the caustic solutions in the scrubbers such that the concentration of oxalyl dihydrazide, chlorobenzhydrazide, aminobenzhydrazide, and mixtures thereof is from about 100 to 50,000 ppm. In other embodiments the concentration is from 1000 to 5000 ppm.

The additives may be desirably added to a liquid feed stream into a basic washing system such as, for example, a caustic scrubber. The additive may be added directly to the caustic scrubber or aspirated into a gas feed stream. The additives maybe also be introduced into a basic washing system using any other method known to be useful for introducing an additive to a scrubber.

In addition to the additive components already described, the additives of the invention may include other compounds known to be useful in basic washing systems such as dispersants, defoamers, and the like. Any compound that does not have an undesirable interaction with the additive's ability to prevent fouling may be used with at least some embodiment of the method of the invention.

### EXAMPLES

The following examples are provided to illustrate the present invention. The examples are not intended to limit the scope of the present invention and they should not be so interpreted. Amounts are in weight parts or weight percentages unless otherwise indicated.

### EXAMPLE 1

A blank was prepared by admixing spent caustic bottoms (pre-filtered to remove existent solid particles) dosed with 6000 ppm of vinyl acetate and with 5% oil. Samples 1-1 through 1-6 are prepared by admixing the blank material with the additive shown below in Table 1. The dosed caustic sample was heated at 80°C for sixteen hours. Once the heating period was complete the sample was allowed to cool to ambient. The caustic was filtered through a 1.0-1.5µm-7.0 cm glass fiber filter. The filter paper was dried and weighed. The weight gain is reported as potential polymer/fouling formation. Inhibitor efficacy is measured in comparison to sample blank.

**Table 1**

| **Sample #** | **Additive dosed** | **Additive Dosage (ppm)** | **Potential Sediment (mg/100 ml)** | **% Fouling Inhibition** |
|---|---|---|---|---|
| BLANK | -- | -- | 245.5 to 315.0** | -- |
| 1-1 | Oxalyl Dihydrazide | 8200 | 89.0 | 66.9 |
| 1-4* | NaBH₄ | 660 | 208.1 | 33.6 |

| | | | | |
|---|---|---|---|---|
| *Comparative Example. **The blank material appeared to degrade with time. Blanks were rerun with each test and % fouling was determined using a blank run near in time with the designated sample. | | | | |

### EXAMPLE 2

10 ml of 2% NaOH was added to 20 ml glass vials. One vial is used as a blank and left untreated. The remaining vials are treated with sufficient vinyl acetate to result in a concentration of 1100 ppm. One of the vials is sealed used as a control. The remaining vials are treated with additives as shown below in Table 2. All four vials were capped and shaken well before settling in an oven at 55°C overnight. Table 2 shows the results of observation.

**Table 2**

| **Sample** | **Inhibitor** | **Result** |
|---|---|---|
| Blank | None | Clear, colorless |
| Control | None | Hazy, yellow colored |
| 2-1 | 2-chlorobenzoic hydrazide (3400 ppm) | Clear, very light yellow colored |
| 2-2 | 4-aminobenzoic hydrazide (3400 ppm) | Clear, ivory colored |

## Claims

1. A method for the prevention or mitigation of fouling in basic washing systems comprising treating a liquid washing phase used in the basic washing system with an additive comprising a member selected from the group consisting of oxalyl dihydrazide, chlorobenzhydrazide, aminobenzhydrazide, and mixtures thereof.

2. The method of Claim 1 wherein the basic washing system is a gas scrubber.

3. The method of Claim 2 wherein the gas scrubber is used to wash a gas including ethylene.

4. The method of Claims 1-3 wherein the liquid washing phase is a caustic liquid.

5. The method of Claim 4, wherein the caustic liquid comprises an aqueous solution of a member selected from the group consisting of sodium hydroxide, potassium hydroxide, lithium hydroxide and mixtures thereof.

6. The method of Claim 5 wherein the caustic liquid comprises an aqueous solution of sodium hydroxide.

7. The method of Claims 1 wherein the additive includes a compound selected from the group consisting of potassium disulfite, sodium thiosulfate, sodium hydrosulfite, and mixtures thereof.

8. The method of Claim 1 wherein the additive comprises an aqueous solution and wherein the concentration of the oxalyl dihydrazide, chlorobenzhydrazide, aminobenzhydrazide, and mixtures thereof is from about 0.1 to about 50 weight percent.

9. The method of Claim 1 wherein the oxalyl dihydrazide, chlorobenzhydrazide, aminobenzhydrazide, and mixtures thereof in the liquid washing phase is present at a concentration of from about 100 to about 50,000 ppm.

## Patentansprüche

1. Verfahren zur Verhinderung oder Verminderung von Fouling in basischen Waschsystemen, bei dem man eine in dem basischen Waschsystem verwendete flüssige waschphase mit einem Additiv, das ein Mitglied aus der Gruppe bestehend aus Oxalyldihydrazid, Chlorbenzhydrazid, Aminobenzhydrazid und Mischungen davon umfasst, behandelt.

2. Verfahren nach Anspruch 1, bei dem es sich bei dem basischen Waschsystem um einen Gaswäscher handelt.

3. Verfahren nach Anspruch 2, bei dem der Gaswäscher zum Waschen eines Ethylen enthaltenden Gases verwendet wird.

4. Verfahren nach den Ansprüchen 1-3, bei dem es sich bei der flüssigen Waschphase um eine Laugenflüssigkeit handelt.

5. Verfahren nach Anspruch 4, bei dem die Laugenflüssigkeit eine wässrige Lösung eines Mitglieds aus der Gruppe bestehend aus Natriumhydroxid, Kaliumhydroxid, Lithiumhydroxid und Mischungen davon umfasst.

6. Verfahren nach Anspruch 5, bei dem die Laugenflüssigkeit eine wässrige Lösung von Natriumhydroxid umfasst.

7. Verfahren nach Anspruch 1, bei dem das Additiv eine Verbindung aus der Gruppe bestehend aus Kaliumdisulfit, Natriumthiosulfat, Natriumhydrosulfit und Mischungen davon einschließt.

8. Verfahren nach Anspruch 1, bei dem das Additiv eine wässrige Lösung umfasst und die Konzentration von Oxalyldihydrazid, Chlorbenzhydrazid, Aminobenzhydrazid und Mischungen davon etwa 0,1 bis etwa 50 Gewichtsprozent beträgt.

9. verfahren nach Anspruch 1, bei dem das Oxalyldihydrazid, Chlorbenzhydrazid, Aminobenzhydrazid und Mischungen davon in der flüssigen Waschphase in einer Konzentration von etwa 100 bis etwa 50.000 ppm vorliegt.

## Revendications

1. Procédé de prévention ou d'atténuation de l'encrassement dans des systèmes de lavage basiques comprenant le traitement d'une phase de lavage liquide utilisée dans le système de lavage basique avec un additif comprenant un composant choisi dans le groupe constitué de dihydrazide d'oxalyle, de chlorobenzhydrazide, d'aminobenzhydrazide, et des mélanges de ceux-ci.

2. Procédé selon la revendication 1, **caractérisé en ce que** le système de lavage basique est un laveur de gaz.

3. Procédé selon la revendication 2, **caractérisé en ce que** le laveur de gaz est utilisé pour laver un gaz comprenant de l'éthylène.

4. Procédé selon les revendications 1-3, **caractérisé en ce que** la phase de lavage liquide est un liquide caustique.

5. Procédé selon la revendication 4, **caractérisé en ce que** le liquide caustique comprend une solution aqueuse d'un composant choisi dans le groupe constitué d'hydroxyde de sodium, d'hydroxyde de potassium, d'hydroxyde de lithium et des mélanges de ceux-ci.

6. Procédé selon la revendication 5, **caractérisé en ce que** le liquide caustique comprend une solution aqueuse d'hydroxyde de sodium.

7. Procédé selon la revendication 1, **caractérisé en ce que** l'additif comprend un composé choisi dans le groupe constitué de disulfite de potassium, de thiosulfate de sodium, d'hydrosulfite de sodium, et des mélanges de ceux-ci.

8. Procédé selon la revendication 1, **caractérisé en ce que** l'additif comprend une solution aqueuse et **en ce que** la concentration du dihydrazide d'oxalyle, du chlorobenzhydrazide, de l'aminobenzhydrazide, et des mélanges de ceux-ci, est d'environ 0,1 à environ 50 pour cent en poids.

9. Procédé selon la revendication 1, **caractérisé en ce que** le dihydrazide d'oxalyle, le chlorobenzhydrazide, l'aminobenzhydrazide, et des mélanges de ceux-ci dans la phase de lavage liquide sont présents à une concentration d'environ 100 à environ 50 000 ppm.
